# EUROPEAN PATENT SPECIFICATION

(11) **EP 0 411 949 B1**
(45) Date of publication and mention of the grant of the patent: **14.12.1994**
(21) Application number: 90308544.7
(22) Date of filing: 02.08.1990
(51) Int. Cl.: C23C 2/00

(54) **Forming lithium layers on substrates**
Herstellung von Lithiumschichten auf Gegenständen
Formation de revêtements de lithium sur des substrats

(30) Priority: 02.08.1989 US 389193
(43) Date of publication of application: 06.02.1991
(73) Proprietor: MHB JOINT VENTURE, Miamisburg Ohio 45342 (US)
(72) Inventor: Koksbang, René, DK-5260 Odense S., (DK); Jensen, Gert Lykke, DK-5700 Svendborg (DK)
(74) Representative: Deans, Michael John Percy

(56) References cited:
- EP-A- 0 285 476
- US-A- 3 086 879
- US-A- 4 254 158
- PATENT ABSTRACTS OF JAPAN, vol. 4, no. 30 (C-2)[512], 15th March 1980; & JP-A-55 6470
- PATENT ABSTRACTS OF JAPAN, vol. 3, no. 157 (C-68), 22nd December 1979; & JP-A-54 132 433
- PATENT ABSTRACTS OF JAPAN, vol. 4, no. 151 (C-28)[633], 23rd October 1980; & JP-A-55 97 458
- PATENT ABSTRACTS OF JAPAN, vol. 4, no. 101 (C-19)[583], 19th July 1980; & JP-A-55 62 152

## Description

The present invention relates to a process and apparatus for forming a lithium layer on a substrate. Lithium is the most reactive metal and there are obvious problems involved in working with this material.

Presently, there is a high level of interest in industry in designing thin layer lithium batteries. These batteries include a lithium anode, a transition metal oxide-polymer composite as a cathode, and an electrolyte which may be a solid or a liquid and which includes a dissolved lithium salt.

A principal objective of the designers of these batteries, particularly in applications in which large electrode areas are needed, is to make them as thin as possible while satisfying market needs in terms of capacity, current density, shelf-life and the like.

While methods for making lithium anodes are known, these methods typically provide an anode containing much more lithium than is necessary to meet the electrochemical requirements of the cell. As a consequence, lithium is wasted, the battery is more expensive, and the battery is substantially thicker than necessary. For example, the most common method for fabricating lithium anodes is cold extrusion, but it is difficult to extrude lithium metal into strips thinner than about 100 microns.

US-A-3 721 113, describes a method for alleviating this difficulty by rolling the lithium between smooth polymeric surfaces having sufficiently low critical surface energy to prevent adhesion, however, even this method is limited to thicknesses not less than about 40 microns. In addition, pre-produced lithium strips having a thickness of less than 50 microns are extremely expensive. As such, they do not present a commercially attractive alternative.

Other methods for coating lithium are known in the art as illustrated by US-A-3 551 184 which involves rubbing a heated substrate with a rod of lithium metal and US-A-3 928 681 and EP-A-285 476 wherein metal substrates are coated as they are conveyed through an alkali metal melt or across a roller which has been immersed in the alkali metal melt. Each of these methods has drawbacks which would make them difficult to implement in an industrial setting. For example, if the apparatus according to EP-A-285 476 would unexpectedly shut down, the roller could quickly corrode and the apparatus would be rendered inoperable.

As will become clear from the detailed description hereinbelow of preferred embodiments, methods and apparatus in accordance with the present invention can enable the provision of a coating of lithium having a controlled thickness, preferably less than 150 microns, on a substrate. As we shall explain, by this means we are able to form lithium anodes for use in electrochemical cells wherein a current collector, such as nickel or copper foil, is coated with a thin layer of lithium.

While the discussion hereafter will make reference to coating metal foil members for use as anodes in lithium cells, the method can be used to provide a microscopic thickness lithium coating on substantially any type of substrate on which a microscopic thickness lithium coating would be desired.

In accordance with a first aspect of the present invention, we provide a process for forming a layer of lithium on a substrate which comprises the steps of: forming a bath of molten lithium in a vessel; circulating said molten lithium in said bath such that said molten lithium is projected above the upper surface of said vessel; transporting a substrate along a path which traverses the upper surface of said vessel; coating said projected molten lithium on to one surface of said substrate with the aid of a coating means; locating a cooling member at a position selected to be a first horizontal distance and a second vertical distance from said coating means; and contacting a second surface of said substrate with said cooling member, thereby solidifying the lithium transferred; the thickness of said lithium layer being selected to a predetermined thickness by selecting said horizontal and vertical distances and the temperature of said cooling member, and said process being performed within an inert environment.

The molten lithium metal is maintained in a vessel and circulated such that molten lithium is projected above the upper surface of the vessel. The substrate passes directly above the vessel, without touching the vessel itself, and is located in a position to enable the projected molten lithium to be coated on the substrate. The contact of the molten lithium metal with the substrate is controlled by coating means to enable a very thin and pure coating of lithium to be provided to the substrate. Once the substrate, after coating, has cooled to below the melting point of lithium (180°C), the lithium coating solidifies on to the substrate. A cooling member is located at a predetermined position selected both horizontally and vertically relative to the coating means. By manipulation of a number of variables such as the contact time between the substrate and the molten lithium, the temperature of the substrate, the temperature of the molten lithium, projectile action of the molten lithium, and the position and temperature of the heat sink, desired coating thicknesses of uncontaminated lithium can be produced. More specifically, the process enables very thin coating thicknesses in the micron and sub-micron size range to be produced.

It is particularly preferred that the molten lithium be projected in the form of a standing wave. This type of projection enables the formation of a thin and pure coating of lithium on to the substrate. The molten lithium of the standing wave is transferred to a rotating transfer roll which, in turn, transfers the molten lithium to a substrate which is in direct contact with the rotating roll. The substrate is cooled shortly after coating to rapidly solidify the metal coating on to the substrate. The heat sink employed is preferably a chilled roller.

Because of the reactivity of lithium, the process takes place in an inert environment, preferably a very dry argon or helium environment.

The invention also extends to a substrate having a layer of lithium coated thereon by the above described method.

The substrate is suitable for use as an anode element for a laminar lithium battery wherein the substrate comprises a metal foil or a metal screen, and in particular, a copper or nickel foil or screen.

In a second and alternative aspect thereof, the invention provides an apparatus for coating a layer of lithium on to a substrate, the apparatus comprising: means for operatively maintaining an inert environment in a predetermined region; a vessel within said region adapted for maintaining lithium molten therein; circulating means in said vessel adapted for circulating the molten lithium to cause the molten lithium to project above the upper surface of said vessel; transport means for operatively transporting within said region a substrate across said vessel to enable said projected molten lithium to be coated on one surface of said substrate; coating means adapted for coating said projected molten lithium on to said one surface of said substrate; and a cooling member located at a position selected to be a first horizontal distance and a second vertical distance from said coating means and arranged for operative contact with a second surface of said substrate, whereby the thickness of lithium coated on said substrate may be selected at a predetermined thickness by selecting said horizontal and vertical distances and the temperature of said cooling member.

In a particular embodiment, the apparatus includes a rotating transfer roll as the coating means which contacts the projected molten lithium and transfers it to one surface of the substrate material, as well as a chilling roll for cooling the substrate after the molten lithium has been coated on to it. The chilling roll is in contact with the uncoated surface of the substrate, and can be located horizontally or vertically at any point along the surface of the substrate to provide appropriate degrees of tension and cooling to the substrate relative to the point of contact with the molten metal to thereby provide coatings having a desired thickness.

The invention is hereinafter more particularly described with reference to the accompanying drawings, in which:
Fig. 1 is a schematic diagram of an apparatus embodying the teachings of the instant invention; and
Fig. 2 is an expanded view of the vessel of the Figure 1 apparatus containing the molten lithium bath.

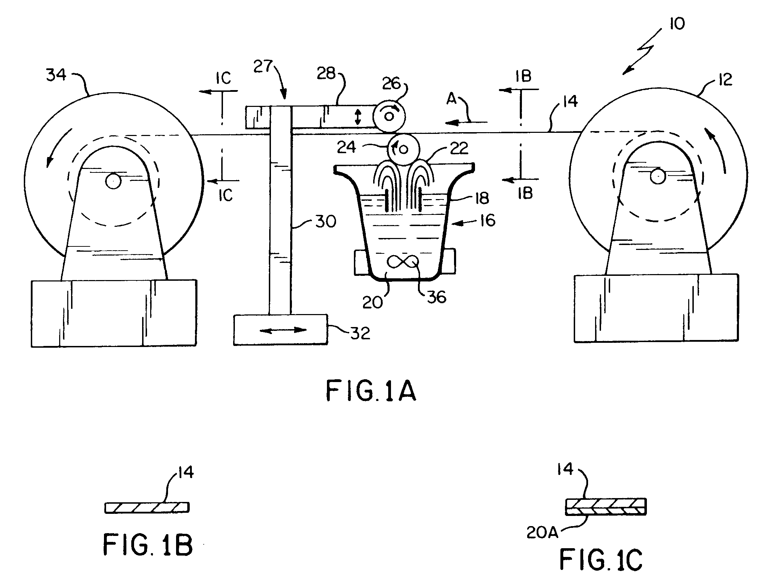

Referring now to the drawings, and more particularly Fig. 1, there is shown an apparatus, generally indicated 10, for coating a thin layer of lithium on a substrate.

Apparatus 10 includes unwinding transport roller 12 which rotates in the direction of the arrow to pay out substrate 14. Substrate 14 moves in the direction of arrow A across lithium coating station 16 and on to take-up roller 34, which is rotated to transport substrate 14 through the apparatus. Prior to transporting across lithium coating station 16, substrate 14 is a uniform material typically having no surface coatings as is seen in Fig. 1B. If the substrate would otherwise react with the lithium to be coated on it, the substrate may be precoated with a non reactive layer. For example, if an aluminium substrate is selected, it can react with lithium to form a brittle alloy. To prevent this from occurring, the aluminium substrate may be pre-coated with a nickel layer, which does not react with lithium. Once the substrate has passed through lithium coating station 16, and subsequently cooled, a solid layer of lithium 20A as shown in Fig. 1C is coated on the lower surface of the substrate 14.

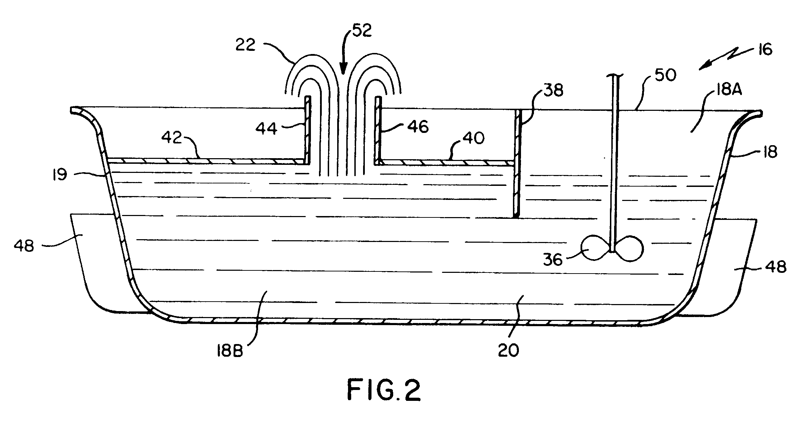

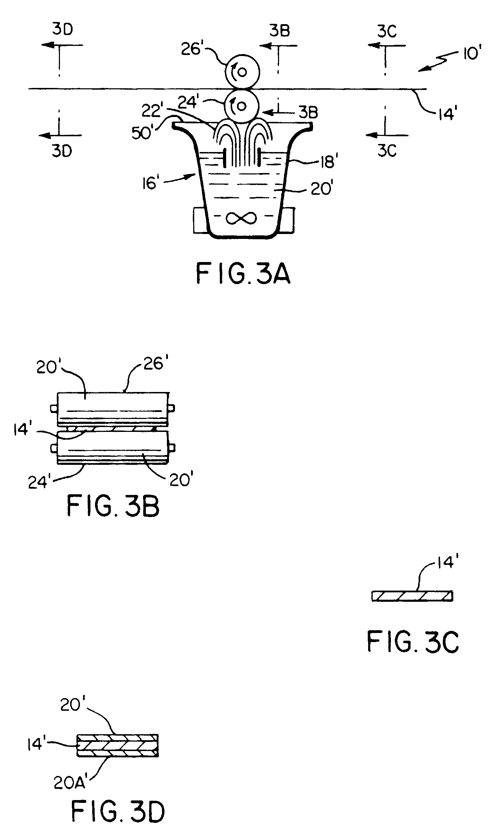

Referring now to Fig. 2, lithium coating station 16 is shown in greater detail. Station 16 includes vessel 18 which houses molten lithium 20. Mounted on the exterior surface of vessel 18 are heaters 48 which heat vessel 18 to melt or maintain lithium 20 in a liquid state. Vessel 18 also includes longitudinal gate 38 which separates vessel 18 into areas 18A and 18B. As will be discussed later, the presence of gate 38 enables the bath of molten lithium 20 to be projected as a standing wave 22 such that the crest of standing wave 22 extends above the upper surface 50 of vessel 18. Also located in area 18A is stirrer 36 for circulating the metal in vessel 18.

Still referring to Fig. 2, area 18B includes flow restriction wall 40 which connects gate 38 to vertical baffle 46. Area 18B also includes flow restriction wall 42 which connects side wall 19 of vessel 18 to vertical baffle 44. The vertical location of flow restriction walls 40 and 42 in vessel 18 is slightly below upper surface 50. Baffles 44 and 46 are connected at walls 40 and 42 and terminate vertically at surface 50 to create opening 52 through which standing wave 22 projects.

Referring back to Fig. 1, apparatus 10 also includes coating roll 24 which contacts standing wave 22 of molten lithium 20. Coating roll 24 rotates in the direction of the arrow to enable the molten lithium present on its external surface to contact the lower surface of substrate 14. Coating roll 24 primarily functions to apply a uniform, continuous coating of molten lithium on to substrate 14. However, the presence of coating roll 24 is optional.

Still referring to Fig. 1, apparatus 10 also includes chilling roll 26 which functions to cool the uncoated surface of substrate 14 to rapidly solidify the molten lithium coating. The lower surface of chilling roll 26 contacts the upper surface of substrate 14. Chilling roll 26 is mounted on to support 27 which includes horizontal arm 28, vertical arm 30 and base 32. Horizontal arm 28 is vertically adjustable and base 32 is horizontally adjustable. As will be discussed later, the adjustability of horizontal arm 28 and base 32 allows for control of the coating thickness of lithium.

To coat a thin lithium layer on to a substrate using the apparatus of Fig. 1, the following procedure is utilized. The uncoated substrate 14 is advanced to where it contacts coating roller 24 which in turn coats molten lithium 20 on to the lower surface of substrate 14.

To enable a sufficient amount of molten lithium to be transferred from coating roll 24 to substrate 14 coating roll 24 must be rotating at a sufficiently rapid rate, for example 50 to 500 rpm. Rotation which is too slow results in an insufficient amount of molten lithium to be transferred to the substrate.

The coating of molten lithium 20 on to coating roller 24 is effectuated at coating station 16. More particularly, solid lithium is deposited into vessel 18 and heaters 48 are activated to melt lithium 20 into a molten state. Stirrer 36 is then activated to cause the formation of standing wave 22 by creating a flow of molten lithium 20 underneath gate 38 and into area 18B. To equilibriate the pressure in area 18B, molten lithium 20 is circulated through opening 52 as standing wave 22. The formation of molten lithium 20 as standing wave 22 is naturally accomplished by the activation of stirrer 36 and the requirement that pressure equilibrium be maintained in vessel 18, particularly in region 18B. Stirrer 36 operates at about 100 to 300 rpm.

As seen in Fig. 1, molten lithium 20 from standing wave 22 contacts the external surface of coating roll 24. The molten lithium that does not contact coating roll 24 projects above gate 38 into area 18A of vessel 18 and is then recirculated in vessel 18 for subsequent coating onto coating roll 24.

After molten lithium 20 has been coated on to substrate 14, substrate 14 is advanced to contact chilling roll 26 on its uncoated surface. Chilling roll 26, which is typically a water cooled roller (i.e. water is circulated in the interior of the roll), functions primarily to rapidly solidify the molten lithium on substrate 14. Other cooling fluids, such as freon and other refrigerants may be substituted for water. It also functions to control the coating thickness of molten lithium 20 on substrate 14. Because chilling roll 26 is in direct contact with the uncoated surface of substrate 14, a tension is created on substrate 14 to force it into contact with coating roll 24. Depending upon the amount of tension on substrate 14, the thickness of the lithium coating can effectively be controlled. Increased tension is created where the chilling roll is horizontally and vertically closest to coating roll 24. The horizontal and vertical location of chilling roll 26 on substrate 14 is controlled by base 32 and horizontal arm 28 respectively. For example, to enable a very thin coating to be formed on substrate 14, base 32 is adjusted towards coating roll 24 and horizontal arm 28 is vertically lowered towards coating roll 24. Conversely, to produce a thicker coating on to substrate 14, base 32 can be adjusted away from coating roll 24 and horizontal arm 28 can be vertically raised away from coating roll 24.

Once coated and cooled, coated substrate 14 is advanced by, and wound on to take up roll 34.

Because of the reactivity of lithium, apparatus 10 must be maintained in a chemically inert (essentially free of water, nitrogen and oxygen) environment to prevent reaction with lithium. Examples of suitable environments include argon, helium and neon, with an argon environment being particularly preferred, being maintained at ambient pressure and temperature.

Lithium is very sensitive to oxygen, nitrogen and water, especially when in the molten state. Even in high purity glove boxes, in which the water and oxygen level is lower than one ppm, the surface of the molten lithium is contaminated. The contamination is observed as a gray surface layer (presumably consisting of lithium oxide, nitride and hydroxide) which grows in time. On a static lithium surface, this contamination layer has to be removed frequently. Coating of a substrate from this contaminated lithium, produces a coating containing lumps/plates of the contaminant. The thickness of the contaminants usually exceeds the thickness of the lithium layer by a factor of 2-5. This lithium coating is obviously not commercially usable, for example, as an anode material for thin film lithium batteries.

By comparison, the standing wave apparatus described takes advantage of a flow of molten lithium. This means that the contamination on the surface of the melt is instantly removed as impurities are transported away from the coating zone. The impurities are accumulated on the surface of the molten lithium in other parts of the apparatus from where they can be removed easily without disturbing the coating process. As the standing wave is formed by lithium from the bottom of the apparatus, contamination of the lithium coating is avoided. Thus, the lithium surface is always free from impurities.

Examples of metal substrates which may be coated in the described apparatus include nickel, copper, aluminum, tin and lead. Other substrate materials may be selected as long as they are solid at the coating temperature and do not react with the lithium. For example, as discussed above, reactive metals (i.e. metals that react with lithium at room temperature) should be precoated with a nonreactive layer. The substrate may either be solid, for example a foil, or porous such as a screen. The latter substrate may be utilized for producing a two sided coating as the molten lithium once coated on to the lower surface of the substrate will interpenetrate the pores of the substrate and transfer the molten lithium to the opposite surface of the substrate. Examples of particularly useful porous substrates include nickel meshes and screens.

Coating station 16 must be designed to enable the lithium to be melted and projected as a standing wave. In practice, to produce a molten lithium bath, heaters 48 must be capable of heating vessel 18 to a temperature greater than the melting point of lithium (180°C). Maintaining a lithium bath between the melting point of pure lithium and about 400°C produces excellent results. A bath temperature of about 250°C is particularly preferred. To produce the standing wave effect, a machine capable of producing a standing wave being equipped with a stirrer may be selected. Once such machine is a Lotanlage Compac 1018, sold by Seitz and Hohnerlein of Kreuzwertheim, West Germany. This machine, when modified as shown in Fig. 2, is capable of producing a standing wave whose crest is projected approximately 1 centimeter above the upper surface of the vessel.

When a coating roll is utilized to transfer molten lithium from the standing wave to the substrate, the coating roll should have a continuous external surface to enable a uniform coating of lithium to be coated onto the substrate. An example of one suitable coating roll is a 2.5 centimeter diameter stainless steel roller having a polished surface. This roll is typically maintained at a temperature about the temperature of the molten metal.

The chilling roll is preferably a water coated or other fluid (those which do not react with lithium) coated interior (room temperature (20°C)), stainless steel or copper exterior roller. Such rollers are well known in the art.

Base 32 and horizontal arm 28, as discussed above, can be adjusted to provide a desired location on substrate 14. For example, base 32 can be adjusted to enable chilling roll 26 to nearly contact coating roll 24, or can be adjusted so that chilling roll is displaced an appropriate distance (typically about 5 centimeters) from coating roll 24. Similarly, horizontal arm 28 can be adjusted to a height of about 3 cm above coating roll 24. In practice, to produce thin coatings, horizontal arm 28 may be adjusted with .1 -2 millimeters from coating roll 24. By adjusting base 32 and horizontal arm 28, the degree of contact between the substrate 14 and the molten lithium can be adjusted and coating thicknesses ranging between less than 1 and about 500 microns may be produced. Particularly preferred coating thicknesses range from about 15 microns to be about 100 microns.

Another, but less important factor which may be utilized to control coating thickness is the rotational speed of take up roll 34, which in turn controls the transport rate of substrate 14. In practice, roll 34 is rotated at a rate to enable substrate 14 to move across coating station 16 at a rate of about 1 to about 15 meters per minute. A transport rate of about 10 meters per minute is particularly preferred.

An additional factor which may be used to control coating thickness is the rotational speed of coating roller 24. In general, increased coating thickness results from an increase in the rotational speed of coating roll 24. In practice, coating roll 24 rotates at a speed ranging from about 50 rpm to about 500 rpm.

Still another factor which can be used to control coating thickness is the temperature of the substrate prior to coating. If the temperature of the substrate is increased, it is believed that the coating thickness will decrease. In practice, the substrate is typically maintained at room temperature. However, to improve adhesion of the coating to the substrate, the substrate may be heated prior to the coating. After coating, the temperature of the chilling roll may also affect coating thickness. Lowering the temperature of the chilling roll can lead to faster solidification of the coated lithium while increasing the temperature of the chilling roll can improve the uniformity of the coating.

To further control coating quality, the height of the standing wave is adjusted to provide an impurity free lithium coating while giving the appearance of being static. If the appearance of the wave is static, a uniform coating can be applied to the substrate. By comparison, if the wave provides a oscillating appearance, the coating will be non-uniform and inhomogeneous. In practice, the height of the wave is less than 2 cm.

The apparatus of Fig. 1 is designed to produce a one-sided coating. For some applications, two-sided coating is desirable. A porous substrate may be used and the molten lithium allowed to interpenetrate the pores of the substrate.

In practice, the coating apparatus and methods described above may be utilized for any coating operation where it is desirable to coat thin layers of lithium on to a substrate. It is particularly preferred that the coating method be used for producing lithium anode elements for solid state electrochemical cells wherein a current collector, such as a nickel or copper foil, is coated with a thin layer of reactive metal. The anode element can be laminated to a cathode element, or to an electrolyte which, in turn, is laminated to a cathode element to produce a completed cell. Other uses for our coating method and apparatus include the coating of lithium electrodes for other electrochemical devices such as electrochromic displays and super capacitors.

## Claims

1. A process for forming a layer of lithium on a substrate which comprises the steps of: forming a bath of molten lithium in a vessel; circulating said molten lithium in said bath such that said molten lithium is projected above the upper surface of said vessel; transporting a substrate along a path which traverses the upper surface of said vessel; coating said projected molten lithium on to one surface of said substrate with the aid of a coating means; locating a cooling member at a position selected to be a first horizontal distance and a second vertical distance from said coating means; and contacting a second surface of said substrate with said cooling member, thereby solidifying the lithium transferred; the thickness of said lithium layer being selected to a predetermined thickness by selecting said horizontal and vertical distances and the temperature of said cooling member, and said process being performed within an inert environment.

2. A process according to Claim 1, further characterised in that said coating step comprises contacting said projected molten lithium with a rotating roll such that said molten lithium is carried on the surface of said roll; and contacting said one surface of said substrate with said rotating roll.

3. A process according to Claim 1 or 2, further characterised in that said circulating step projects said molten lithium as a standing wave.

4. A process according to any preceding claim, further characterised in that said cooling member comprises a chilling roll.

5. A process according to any preceding claim, further characterised in that said substrate comprises a metal foil.

6. A process according to any of Claims 1 to 4, further characterised in that said substrate comprises a metal screen.

7. A substrate having a layer of lithium coated thereon, obtainable by a process according to any preceding claim, further characterised in that the thickness of coated lithium ranges from about 1 to about 500 µm.

8. An apparatus (10) for coating a layer of lithium on to a substrate (14), the apparatus comprising: means for operatively maintaining an inert environment in a predetermined region; a vessel (18) within said region adapted for maintaining lithium (20) molten therein; circulating means in said vessel (18) adapted for circulating the molten lithium (20) to cause the molten lithium to project above the upper surface of said vessel; transport (12,34) means for operatively transporting within said region said substrate (14) across said vessel to enable said projected molten lithium (22) to be coated on one surface of said substrate; coating means (24) adapted for coating said projected molten lithium (22) on to said one surface of said substrate; and a cooling member (26) located at a position selected to be a first horizontal distance and a second vertical distance from said coating means (24) and arranged for operative contact with a second surface of said substrate, whereby the thickness of lithium coated on said substrate (14) may be selected at a predetermined thickness by selecting said horizontal and vertical distances and the temperature of said cooling member (24).

9. Apparatus according to Claim 8, further characterised in that said circulating means is operatively arranged to project the molten metal as a standing wave (22) whose crest extends above the upper surface of said vessel (18).

10. Apparatus according to Claims 8 or 9, further characterised in that said coating means (24) comprises rotating roll means adapted for operatively contacting said projected molten metal (22) and transferring the same on to a surface of the substrate (14).

11. Apparatus according to any of Claims 8, 9 or 10, further characterised in that said cooling member (26) comprises chilling roll means.

## Patentansprüche

1. Verfahren zur Bildung einer Lithiumschicht auf einem Substrat gekennzeichnet durch die folgenden Schritte: Bildung eines Bades aus geschmolzenem Lithium in einem Behälter; Zirkulieren des geschmolzenen Lithiums in dem Bad, so daß das geschmolzene Lithium über die obere Oberfläche des Behälters hinausgetragen wird; Transportieren des Substrats entlang eines Pfades, der die obere Oberfläche des Behälters durchquert; Aufbringen des herausgetragenen geschmolzenen Lithiums auf einer Seite des Substrats unter Zuhilfenahme eines Beschichtungsmittels; Anordnung eines Kühlbauteils in einer Position, die ausgewählt wird, so daß es sich in einer ersten horizontalen Distanz und in einer zweiten vertikalen Distanz von dem Beschichtungsmittel befindet; und in Kontakt Bringen einer zweiten Oberfläche des Substrats mit dem Kühlbauteil, wodurch das übertragene Lithium erstarrt wird; daß die Dicke der Lithiumschicht auf eine vorbestimmte Dicke ausgewählt wird, indem die horizontalen und vertikalen Distanzen und die Temperatur des Kühlbauteils ausgewählt werden und daß das Verfahren in einer inerten Umgebung durchgeführt wird.

2. Verfahren nach Anspruch 1, weiterhin dadurch gekennzeichnet, daß der Beschichtungsschritt das in Kontakt Treten des herausgetretenen geschmolzenen Lithiums mit einer rotierenden Rolle umfaßt, so daß das geschmolzene Lithium auf die Oberfläche der Rolle aufgetragen wird; und daß die eine Oberfläche des Substrats mit der rotierenden Rolle in Kontakt tritt.

3. Verfahren nach Anspruch 1 oder 2, dadurch gekennzeichnet, daß der Zirkulationsschritt das geschmolzene Lithium als stehende Welle austreten läßt.

4. Verfahren nach einem der vorhergehenden Ansprüche, dadurch gekennzeichnet, daß das Kühlbauteil eine Kühlrolle umfaßt.

5. Verfahren nach einem der vorhergehenden Ansprüche, dadurch gekennzeichnet, daß das Substrat eine Metallfolie umfaßt.

6. Verfahren nach einem der Ansprüche 1 bis 4, dadurch gekennzeichnet, daß das Substrat ein Metallgitter umfaßt.

7. Substrat mit einer Schicht von darauf aufgetragenem Lithium, das nach einem der vorhergehenden Ansprüche erzielbar ist und dadurch gekennzeichnet ist, daß die Dicke des aufgetragenen Lithiums im Bereich von ungefähr 1 bis ungefähr 500 µm rangiert.

8. Vorrichtung (10) zum Auftragen einer Lithiumschicht auf einem Substrat (14), gekennzeichnet durch folgende Merkmale: Mittel zum operativen Aufrechterhalten einer inerten Umgebung in einer vorbestimmten Region; einen Behälter (18) innerhalb der Region, der geeignet ist, um darin Lithium (20) geschmolzen zu halten; Zirkuliermittel in dem Behälter (18), die zum Zirkulieren des geschmolzenen Lithiums (20) geeignet sind, um das geschmolzene Lithium dazu zu bringen, über der oberen Oberfläche von dem Behälter herauszutreten; Transportmittel (12,34) zum operativen Transportieren des Substrats (14) innerhalb dieser Region über den Behälter hinüber, um dem herausgetretenen geschmolzenen Lithium (22) zu gestatten, auf einer Oberfläche des Substrats aufgetragen zu werden; Beschichtungsmittel (24), die geeignet sind, das herausgetretene geschmolzene Lithium (22) auf der einen Oberfläche des Substrats aufzutragen; und ein Kühlbauteil (26), das in einer ausgewählten Position angeordnet ist, um sich in einem ersten horizontalen Abstand und einem zweiten vertikalen Abstand von dem Beschichtungsmittel (24) zu befinden und das für einen operativen Kontakt mit einer zweiten Oberfläche des Substrats angeordnet ist, wobei die Dicke des auf dem Substrat (14) aufgetragenen Lithiums in einer vorbestimmten Dicke ausgewählt werden kann, indem die horizontalen und vertikalen Abstände und die Temperatur des Kühlbauteils (24) ausgewählt werden.

9. Vorrichtung nach Anspruch 8, dadurch gekennzeichnet, daß das Zirkuliermittel operativ angeordnet ist, um das geschmolzene Metall als stehende Welle (22) herauszutragen, deren Kamm über die obere Oberfläche des Behälters (18) hinausgeht.

10. Vorrichtung nach Anspruch 8 oder 9, dadurch gekennzeichnet, daß das Beschichtungsmittel (24) rotierende Rollenmittel umfaßt, die für einen operativen Kontakt mit dem herausgetragenen geschmolzenen Metall (22) geeignet sind und dasselbe auf die Oberfläche des Substrats (14) übertragen.

11. Vorrichtung nach einem der Ansprüche 8, 9 oder 10, dadurch gekennzeichnet, daß das Kühlbauteil (26) Kühlrollenmittel umfaßt.

## Revendications

1. Procédé pour former une couche de lithium sur un substrat comprenant les étapes suivantes: formation d'un bain de lithium fondu dans une cuve; mise en circulation dudit lithium fondu dans ledit bain de sorte que ledit lithium fondu est projeté au-dessus de la surface supérieure de ladite cuve; transport d'un substrat suivant une trajectoire qui traverse la surface supérieure de ladite cuve; application dudit lithium fondu projeté sur une surface dudit substrat à l'aide de moyens de revêtement; positionnement d'un organe de refroidissement dans une position sélectionnée pour constituer une première distance horizontale et une deuxième distance verticale desdits moyens de revêtement; et mise en contact d'une deuxième surface dudit substrat avec ledit organe de refroidissement, solidifiant ainsi le lithium transféré; l'épaisseur de ladite couche de lithium étant sélectionnée selon une épaisseur prédéterminée en sélectionnant lesdites distances horizontale et verticale et la température dudit organe de refroidissement, et ledit procédé étant réalisé dans un environnement inerte.

2. Procédé selon la revendication 1, caractérisé en outre en ce que ladite étape de revêtement comprend la mise en contact dudit lithium fondu projeté avec un rouleau rotatif de sorte que ledit lithium fondu est amené sur la surface dudit rouleau; et la mise en contact d'une dite surface dudit substrat avec ledit rouleau rotatif.

3. Procédé selon la revendication 1 ou 2, caractérisé en outre en ce que ladite étape de mise en circulation projette ledit lithium fondu sous forme d'une onde stationnaire.

4. Prodédé selon l'une quelconque des revendications précédentes, caractérisé en outre en ce que l'organe de refroidissement comprend un rouleau de réfrigération.

5. Procédé selon l'une quelconque des revendications précédentes, caractérisé en outre en ce que le substrat comprend une feuille métallique.

6. Procédé selon l'une quelconque des revendications de 1 à 4, caractérisé en outre en ce que le substrat comprend un écran métallique.

7. Substrat recouvert d'une couche de lithium, pouvant être obtenue par un procédé selon l'une quelconque des revendications précédentes, caractérisé en outre en ce que l'épaisseur du lithium appliqué varie de 1 à environ 500 µm.

8. Appareil (10) pour appliquer une couche de lithium sur un substrat (14), appareil comprenant: des moyens pour maintenir de manière opérationnelle un environnement inerte dans une zone prédéterminée; une cuve (18) dans ladite zone adaptée pour maintenir du lithium fondu (20); des moyens de mise en circulation dans ladite cuve (18) adaptés pour faire circuler le lithium fondu (20) pour projeter le lithium fondu au-dessus de la surface supérieure de ladite cuve; des moyens de transport (12, 34) pour transporter de manière opérationnelle à l'intérieur de ladite zone ledit substrat (14) à travers ladite cuve pour permettre audit lithium fondu projeté (22) d'être appliqué sur une surface dudit substrat; des moyens de revêtement (24) adaptés pour l'application dudit lithium fondu projeté (22) sur une dite surface dudit substrat; et un organe de refroidissement (26) situé à un emplacement choisi pour constituer une première distance horizontale et une deuxième distance verticale à partir desdits moyens de revêtement (24) et disposés pour assurer un contact opérationnel avec une deuxième surface dudit substrat, dans lequel l'épaisseur du lithium appliqué sur ledit substrat (14) peut être sélectionnée selon une épaisseur prédéterminée en sélectionnant lesdites distances horizontale et verticale et la température dudit organe de refroidissement (24).

9. Appareil selon la revendication 8, caractérisé en outre en ce que lesdits moyens de mise en circulation sont disposés opérationnellement pour projeter le métal fondu sous forme d'une onde stationnaire (22) dont la crête s'étend au-dessus de la surface supérieure de ladite cuve (18).

10. Appareil selon la revendication 8 ou 9, caractérisé en outre en ce que lesdits moyens de revêtement (24) comprennent des moyens formant rouleau rotatif adaptés pour être en contact de manière opérationnelle avec ledit métal fondu projeté (22) et transférer ce dernier sur une surface du substrat (14).

11. Appareil selon l'une quelconque des revendications 8, 9 ou 10, caractérisé en outre en ce que ledit organe de refroidissement (26) comprend des moyens formant rouleau de réfrigération.
